# EUROPÄISCHE PATENTSCHRIFT

(11) **EP 4 208 308 B1**
(45) Veröffentlichungstag und Bekanntmachung des Hinweises auf die Patenterteilung: **15.11.2023**
(21) Anmeldenummer: 21769083.3
(22) Anmeldetag: 21.08.2021
(51) Int. Cl.: B23F 19/12, B23F 5/08, B23F 1/02, B24B 19/00

(54) **VERFAHREN ZUM SCHLEIFEN EINER VERZAHNUNG ODER EINES PROFILS EINES WERKSTÜCKS**
METHOD FOR GRINDING A TOOTHING OR A PROFILE OF A WORKPIECE
PROCÉDÉ PERMETTANT DE MEULER UNE DENTURE OU UN PROFIL D'UNE PIÈCE À TRAVAILLER

(30) Priorität: 03.09.2020 DE 102020123073
(43) Veröffentlichungstag der Anmeldung: 12.07.2023
(73) Patentinhaber: Kapp Niles GmbH & Co. KG, 96450 Coburg (DE)
(72) Erfinder: FÖHRKOLB, Andreas, 96489 Niederfüllbach (DE)
(74) Vertreter: Gosdin, Carstensen & Partner Patentanwälte Partnerschaftgesellschaft mbB
(86) Internationale Anmeldenummer: PCT/EP2021/073211
(87) Internationale Veröffentlichungsnummer: WO 2022/048928

(56) Entgegenhaltungen:
- EP-A1- 3 208 023
- EP-A2- 2 093 007
- DE-A1-102008 036 549
- DE-A1-102013 003 804
- GB-A- 1 038 303
- US-A- 2 539 449
- US-A- 3 053 017
- US-A1- 2017 021 437

## Beschreibung

Die Erfindung betrifft ein Verfahren gemäß dem Oberbegriff des Anspruchs 1 zum Schleifen einer Verzahnung oder eines Profils eines Werkstücks mittels einer Schleifscheibe, wobei die Schleifscheibe als Profilschleifscheibe ausgebildet ist und durch vorgefertigte Zahn- oder Profillücken geführt wird oder Zahn- oder Profillücken herstellt, wobei das Werkstück eine Drehachse aufweist, wobei die Schleifscheibe eine Drehachse sowie einen Mittelpunkt aufweist, der auf der Drehachse der Schleifscheibe und in der Mitte der axialen Erstreckung der Schleifscheibe liegt, und wobei das Werkstück zumindest in einem axialen Endbereich der Verzahnung oder des Profils eine Stirnfläche aufweist, wobei das Schleifen der Verzahnung oder des Profils die Schritte umfasst a) Schleifen der Zahn- oder Profillücken des Werkstücks mittels der Profilschleifscheibe; und b) Schleifen von Fasen in den Bereich des axialen Endes der Zahn- oder Profillücken mittels der Schleifscheibe, wobei die Schleifscheibe in einer Position angeordnet wird oder zumindest zeitweise während des Schleifens der Fasen die Position einnimmt, bei der die Schleifscheibe relativ zum Werkstück so angeordnet ist, dass ein axiales Ende der Zahn- oder Profillücke die Schleifscheibe kontaktiert.

Ein Verfahren gemäss dem Oberbegriff des Anspruchs 1 ist aus dem Dokument DE 10 2008 036 549 A1 bekannt.

Ähnliche Lösungen zeigen die DE 37 21 949 A1, die DE 43 97 508 T1, die US 3 053 017 A, die DE 10 2013 003 804 A1, die GB 1 038 303 A, die US 2017/021437 A1, die EP 2 093 007 A2, die US 2 539 449 A und die EP 3 208 023 A1**.**

Bei der Herstellung von Verzahnungen und ähnlichen Profilen ist es üblich, aus einem Rohling zunächst durch ein Vorbearbeitungsverfahren (z. B. Wälzfräsen) in das noch ungehärtete Material die Grundkontur der herzustellenden Verzahnung einzuarbeiten; d. h. die Zahnlücke wird insoweit zunächst vorgefertigt. Abhängig von der Größe des Werkstücks sowie der Losgröße kann sich ein Bearbeitungsschritt anschließen, bei dem stirnseitige Fasen eingearbeitet werden. Bei kleineren Losen und großen Werkstücken ist es bekannt, die stirnseitige Fase mehr oder weniger definiert manuell anzubringen, wozu insbesondere Winkel- bzw. Stabschleifer verwendet werden. Mitunter werden auch spezielle Einrichtungen eingesetzt, um die stirnseitige Fase in einem separaten Arbeitsgang maschinell zu erzeugen. Im Anschluss hieran erfolgt das Härten des Werkstücks und der insofern vorgefertigten Verzahnung. Die abschließende Hartbearbeitung erfolgt dann insbesondere durch Schleifen, insbesondere durch Profilschleifen.

Nach dem Schleifen der Verzahnung (insbesondere im Falle von Evolventenverzahnungen) kann es an den stirnseitigen Enden der Verzahnung (insbesondere bei großem Materialabtrag) zu einer Gratbildung und/oder zu scharfen Kanten kommen. Dies erfordert eine entsprechende Nacharbeit (insbesondere in manueller Weise). Diese Problematik ergibt sich im besonderen Maße, wenn die Verzahnung bzw. das Profil ins Volle geschliffen wird, d. h. wenn keine Vorbearbeitung, insbesondere durch Wälzfräsen, erfolgt, sondern die Verzahnung bzw. das Profil in einen zylindrischen Rohling durch Schleifen eingebracht wird.

Der Erfindung liegt die **Aufgabe** zugrunde, ein gattungsgemäßes Verfahren so weiterzuentwickeln, dass es möglich ist, in einfacher und präziser Weise die axialen Enden der Verzahnung bzw. des Profils vom Grat zu befreien herzustellen und dort eine definierte Fase anzubringen.

Die **Lösung** gemäß Anspruch 1 dieser Aufgabe durch die Erfindung sieht vor, dass in einer Projektion auf eine Ebene, die die Drehachse des Werkstücks sowie den Mittelpunkt der Schleifscheibe beinhaltet, zwischen der Drehachse des Werkstücks und der Verbindungslinie zwischen dem axialen Ende der Zahn- oder Profillücke und dem Mittelpunkt ein Winkel eingeschlossen wird, der zwischen 20° und 70° liegt,
wobei die Profilschleifscheibe eine abrichtbare Schleifscheibe ist und dass nach der Durchführung des Schritts a) und vor der Durchführung des Schritts b) das Profil der Schleifscheibe durch einen Abrichtvorgang verändert wird.

Demgemäß wird das Profil der Schleifscheibe von demjenigen, welches für das Schleifen der Verzahnung bzw. des Profils nötig ist, auf jenes geändert, mit dem die Fasen in der gewünschten Form geschliffen werden können.

Bei der Durchführung des obigen Schritts a) können die Zahn- oder Profillücken bei bevorzugten Anwendungen vorteilhaft ins Volle geschliffen werden.

Der genannte Schritt b) erfolgt bevorzugt, indem eine relative Zustellung zwischen Werkstück und Schleifscheibe vorgenommen wird. Der Schritt kann auch so ausgeführt werden, dass die Schleifscheibe relativ zum Werkstück senkrecht zur Verbindungslinie geführt wird. Natürlich ist es weiter möglich, dass die Schleifscheibe NC-gesteuert entlang einer vorgegebenen Bahn bewegt wird, um die Fase zu schleifen.

Der genannte Winkel beträgt bevorzugt zwischen 35° und 55°.

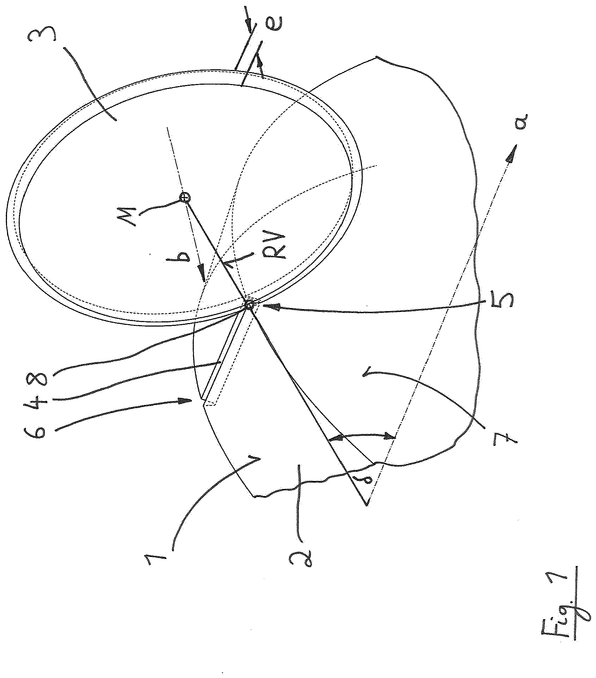

Eine mögliche Ausgestaltung des Verfahrens sieht vor, dass beim Schleifen der Fase eine Ebene, die durch den Mittelpunkt der Schleifscheibe geht und senkrecht auf der Drehachse der Schleifscheibe steht, mit der Zahn- oder Profillücke fluchtet (s. hierzu das unten erläuterte Ausführungsbeispiel gemäß Figur 1).

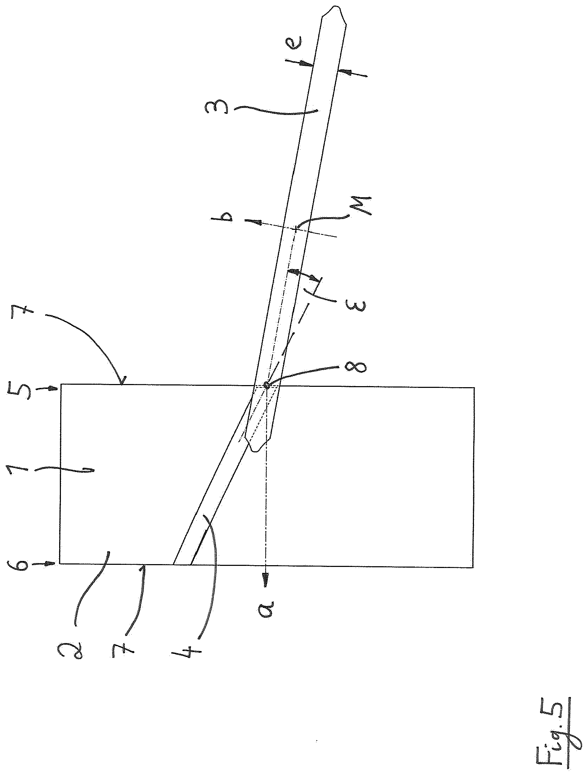

Alternativ ist es aber auch möglich, dass beim Schleifen der Fase eine Ebene, die durch den Mittelpunkt der Schleifscheibe geht und senkrecht auf der Drehachse der Schleifscheibe steht, aus der Flucht mit der Zahn- oder Profillücke um einen Winkel verschwenkt ist. Dieser Winkel liegt bevorzugt zwischen 2° und 25° (s. hierzu das unten erläuterte Ausführungsbeispiel gemäß Figur 5). Insbesondere ist vorgesehen, dass der Winkel im Falle des Schleifens einer Schrägverzahnung zwischen 2° und dem Schrägungswinkel der Verzahnung liegt.

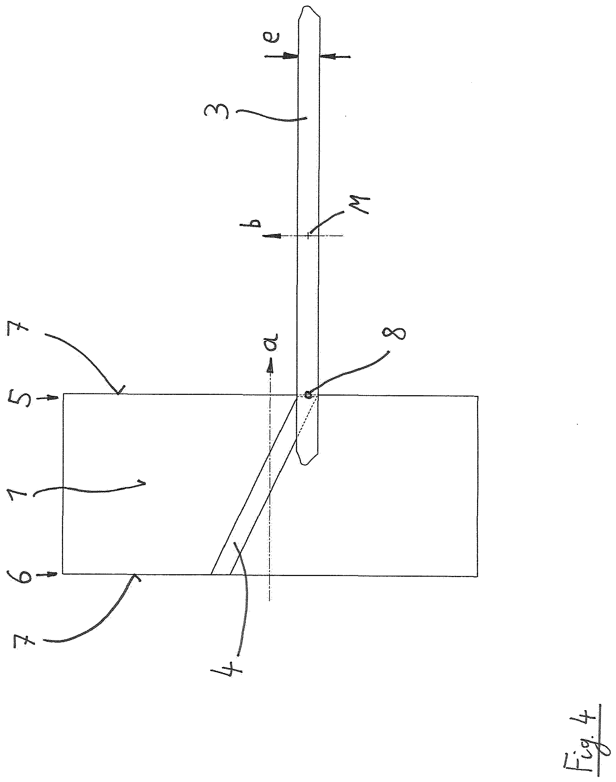

Eine weitere alternative Ausgestaltung des Verfahrens sieht vor, dass beim Schleifen der Fase der Winkel zwischen der Projektion der Drehachse der Schleifscheibe auf eine Mittenebene des Werkstücks, die die Drehachse des Werkstücks beinhaltet, und der Drehachse des Werkstücks 90° beträgt. Die Schleifscheibe ist in diesem Falle in Richtung ihrer Drehachse so verschoben, dass das axiale Ende der Zahn- oder Profillücke die Schleifscheibe kontaktiert (s. hierzu das unten erläuterte Ausführungsbeispiel gemäß Figur 4). Für diesen Fall hat es sich bewährt, wenn die Schleifscheibe so profiliert ist, dass sie ein asymmetrisches Profil aufweist. Hiermit kann eine optimale bzw. gewünschte Form der Fase geschliffen werden.

Die Fase wird zumeist an den axialen Enden sämtlicher Zahn- oder Profillücken geschliffen. Sie wird weiterhin zumeist in beiden axialen Endbereichen des Werkstücks geschliffen.

Mit der vorgeschlagenen Vorgehensweise ist ein stirnseitig definiertes Anfasen der Verzahnung bzw. des Profils mittels der Profilschleifscheibe möglich, die ansonsten zum Schleifen der Verzahnung bzw. des Profils selber eingesetzt wird.

Besonders bevorzugt wird das vorgeschlagene Verfahren bei der Herstellung von Evolventenverzahnungen eingesetzt. Es ist aber auch für andere Verzahnungen bzw. Profile einsetzbar.

Das Verfahren erlaubt also unter Einsatz einer profilierten Schleifscheibe, die in der oben definierten speziellen Schleifposition eingesetzt wird, kontrolliert und wiederholbar die gewünschten Fasen am Werkstück anzubringen. Wenn hierzu, gemäß der genannten bevorzugten Ausführungsform der Erfindung, vor dem Schleifen der Fasen ein Abrichten der Schleifscheibe auf ein geändertes Profil erfolgt, besteht die Möglichkeit, die Geometrie der zu schleifenden Fasen, im Rahmen gewisser Grenzen, nach vorgegebenen Wünschen zu definieren.

Die zum Einsatz kommende Profilschleifscheibe, mit der die Verzahnung bzw. das Profil geschliffen wird, wird also nach entsprechender Positionierung gezielt auch dafür eingesetzt, eine Fase in den axialen Endbereich der Zahn- bzw. Profillücke einzuschleifen, was insbesondere durch Kombination einer radialen und axialen Bewegung der Schleifscheibe relativ zum Werkstück (durch entsprechende Nutzung der NC-Achsen der Maschine) erfolgt. Dabei erfolgt die Positionierung bzw. Einstellung (insbesondere bezüglich des oben genannten Winkels) gemäß der gewünschten Vorgaben zur Ausgestaltung der Fase. Hiermit kann insbesondere erreicht werden, dass die Fase gleichmäßig angeschliffen wird und hierbei insbesondere und bevorzugt parallel zur Stirnfläche einer vorverzahnten Schrägverzahnung steht.

Vorteilhaft wird das Verfahren insbesondere bei der Kleinserienfertigung bzw. Fertigung großer Werkstücke eingesetzt, wobei nach dem eigentlichen Schleifprozess (ggf. aufgeteilt in Schruppen und Schlichten, gleichermaßen ist auch ein Schleifen ins Volle möglich) definiert die stirnseitigen Fasen an die Verzahnungen angebracht werden.

Das Verfahren kann grundsätzlich über die Anwendung bei Evolventenverzahnungen hinaus verwendet werden, als auch für andere Verzahnungstypen.

Vorteilhaft erfolgt das beschriebene Verfahren als Teil bzw. im Anschluss direkt nach dem Schleifen der Verzahnung bzw. des Profils in der gleichen Aufspannung des Werkstücks.

Besonders vorteilhaft wird das Verfahren bei großen Werkstückabmessungen und einer großen Zähnezahl der Verzahnung eingesetzt.

In der Zeichnung sind Ausführungsbeispiele der Erfindung dargestellt.
- Fig. 1: zeigt in perspektivischer Darstellung und gemäß einer ersten Ausführungsform der Erfindung ein Zahnrad, in dessen axialen Endbereich eine Fase mittels einer Profilschleifscheibe geschliffen wird,
- Fig. 2: zeigt in perspektivischer Darstellung und gemäß einer zweiten Ausführungsform der Erfindung das Zahnrad, in dessen axialen Endbereich die Fase mittels der Profilschleifscheibe geschliffen wird,
- Fig. 3: zeigt in perspektivischer Darstellung sowie in vergrößerter Darstellung den axialen Endbereich des Zahnrades mit Darstellung der angeschliffenen Fase,
- Fig. 4: zeigt in perspektivischer Darstellung und gemäß einer dritten Ausführungsform der Erfindung das Zahnrad, in dessen axialen Endbereich die Fase mittels der Profilschleifscheibe geschliffen wird und
- Fig. 5: zeigt in perspektivischer Darstellung und gemäß einer vierten Ausführungsform der Erfindung das Zahnrad, in dessen axialen Endbereich die Fase mittels der Profilschleifscheibe geschliffen wird.

In Figur 1 ist ein Werkstück 2 in Form eines Zahnrades dargestellt, welches eine Verzahnung 1 aufweist. Die Verzahnung 1 weist vorgefertigte Zahnlücken 4 auf (von denen nur eine dargestellt ist; weitere sind gleichmäßig verteilt über den Umfang des Werkstücks 2 angeordnet). Zum Schleifen der Verzahnung 1 wird eine Profilschleifscheibe 3 eingesetzt. Diese wurde in bekannter Weise entlang der Zahnlücke 4 bei vorgegebenem Abstand zwischen Werkstück 2 und Schleifscheibe 3 durch diese geführt, um die Zahnlücke mit der endgültigen benötigten Kontur zu versehen (d. h. es erfolgte eine Bearbeitung der Verzahnung durch Profilschleifen).

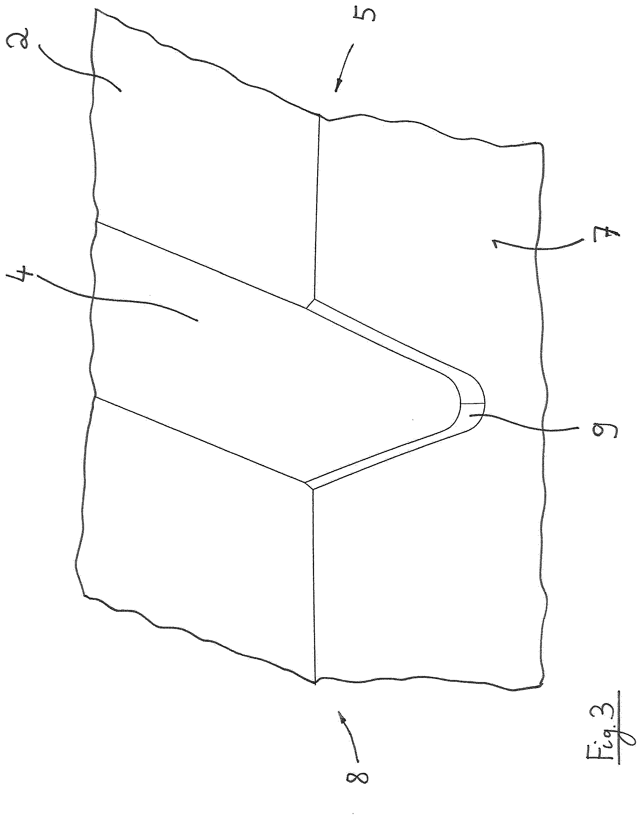

Die Verzahnung 1 hat zwei axiale Endbereiche 5 und 6; hier grenzen die beiden Stirnflächen 7 an (von der nur die vordere in Figur 1 zu sehen ist). Im Bereich des axialen Endes 8 der Zahnlücke 4 kann es durch das Schleifen zur Bildung eines störenden Grates gekommen sein. Weiterhin ist hier die Anordnung einer definierten Fase gewünscht. Um diese maschinell und automatisiert herzustellen, wird wie folgt vorgegangen:
Zunächst erfolgt, was allerdings nicht dargestellt ist, ein neuerliches Abrichten der Schleifscheibe 3, und zwar auf ein Profil, welches für die gewünschten Fasen (s. Figur 3) vorgegeben wurde.

Dann wird die Profilschleifscheibe 3, mit der die Zahnlücke 4 bereits geschliffen wurde, wird in eine Position verbracht, wie sie in Figur 1 dargestellt ist.

Demgemäß befindet sich das axiale Ende 8 der Zahnlücke 4 in unmittelbarer Nähe zur Schleifscheibe 3. Hinsichtlich der Position der Schleifscheibe 3 relativ zum Werkstück 2 ergibt sich, dass in einer Projektion auf eine Ebene, die die Drehachse a des Werkstücks 2 sowie den Mittelpunkt M der Schleifscheibe 3 beinhaltet, zwischen der Drehachse a des Werkstücks 2 und der Verbindungslinie RV zwischen dem axialen Ende der Zahn- oder Profillücke 8 und dem Mittelpunkt M ein Winkel δ eingeschlossen wird, der im Ausführungsbeispiel gemäß Figur 1 bei ca. 45 ° liegt.

Dabei ergibt sich der Mittelpunkt M der Schleifscheibe 3 als Punkt auf der Drehachse b der Schleifscheibe, der in der Mitte der axialen Erstreckung e der Schleifscheibe liegt.

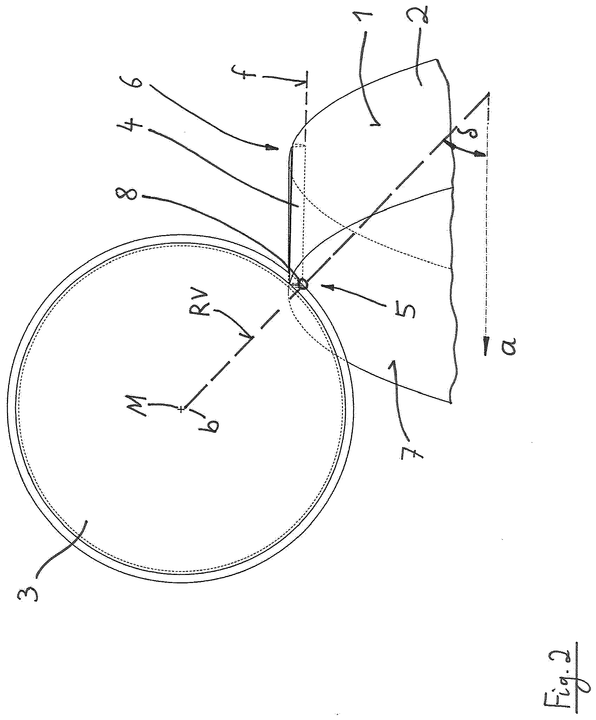

Die Verbindungslinie RV ergibt sich, wenn die Schleifscheibe 3 gerade das axiale Ende der Zahnlücke 4 kontaktiert, wie es gleichermaßen in Figur 1 und Figur 2 dargestellt ist. Hinsichtlich der präzisen Lage des axialen Endes der Zahn- oder Profillücke 8 sei auf Figur 2 verwiesen, wo der Fußkreis f der Verzahnung 1 angedeutet ist; dort, wo der Fußkreis f das axiale Ende des Werkstücks 2 erreicht, liegt das axiale Ende 8 der Zahn- oder Profillücke.

Ist die erläuterte Position erreicht, wird die Fase mittels der Profilschleifscheibe 3 geschliffen, indem die Schleifscheibe 3 relativ zum Werkstück 2 entsprechend zugestellt oder entlang einer vorgegebenen Bahn geführt wird. Das Ergebnis dieses Vorgangs ist in Figur 3 skizziert, wo die so eingeschliffene Fase 9 am axialen Ende der Profillücke 4 dargestellt ist.

In Figur 1 ist der Fall dargestellt, dass ein geradverzahntes Werkstück 2 geschliffen und anschließend die Fase angebracht wird. Zu erkennen ist, wie die Profilschleifscheibe 3 beim Schleifen der Fase 9 mit der Zahnlücke 4 fluchtet.

Hinsichtlich des Fluchtens sei angemerkt, dass hierbei zunächst eine Ebene definiert wird, die die Drehachse a des Werkstücks beinhaltet, die Drehachse b der Schleifscheibe wird verschoben bzw. projiziert, bis sie auf der Höhe der Drehachse a des Werkstücks liegt; die Drehachse a und die verschobene bzw. projizierte Drehachse b bilden die genannte Ebene. Flucht liegt vor, wenn die Richtung der Zahn- oder Profillücke (am axialen Auslauf aus dem Werkstück 2), projiziert in die genannte Ebene und die Richtung senkrecht zur Drehachse b, ebenfalls projiziert in die genannte Ebene, keinen Winkel (bzw. Null Grad) einschließen.

Diese Flucht liegt auch bei dem Ausführungsbeispiel gemäß Figur 2 vor. Der Unterschied zu Figur 1 liegt hier darin, dass es sich hier um das Schleifen einer Schrägverzahnung handelt. Ansonsten gilt dasselbe, was im Zusammenhang mit Figur 1 gesagt wurde. Insbesondere ist auch aus Figur 2 wieder ersichtlich, wie die Profilschleifscheibe 3 in die genannte Position verbracht wurde (siehe Winkel δ), bevor die Fase 9 geschliffen wird.

Beim Ausführungsbeispiel gemäß Figur 4 liegt nun keine Flucht der Profilschleifscheibe 3 mit der Zahnlücke 4 vor. Vielmehr wurde die Schleifscheibe 3 in Richtung ihrer Drehachse b verschoben (bei gleichzeitiger korrespondierender Rotation des Werkstücks 2 um seine Achse a), bis wieder die Positionsverhältnisse wie im Falle der Figuren 1 und 2 hergestellt wurden. Das Arbeiten ohne die Flucht (gemäß den Figuren 1 und 2) hat bei gegebenen Verhältnissen den Vorteil, dass die Fase 9 günstig angebracht werden kann. Insofern stellt das Ausführungsbeispiel gemäß Figur 4 eine besonders bevorzugte Lösung gemäß der vorliegenden Erfindung dar.

Abhängig von den gegebenen Verhältnissen kann schließlich ein Schleifen der Fase 9 sinnvoll sein, wie es sich aus dem Ausführungsbeispiel gemäß Figur 5 ergibt.

Wiederum liegt hier keine Flucht der Profilschleifscheibe 3 mit der Zahnlücke 4 vor. Nun allerdings ist die Profilschleifscheibe 3 gezielt um einen Schwenkwinkel ε aus der Flucht gedreht worden, bevor die Fase 9 geschliffen wird. Auch dies kann sehr vorteilhaft sein, um die Fase 9 mit der gewünschten Profilierung der Schleifscheibe 3 optimiert zu gestalten.

Abhängig vom konkreten Anwendungsfall und namentlich von der speziellen Geometrie der zu schleifenden Lücke kann es durch das nicht-fluchende Positionieren der Schleifscheibe relativ zum Verlauf der Zahnlücke also möglich werden, eine vorteilhafte Geometrie für die zu schleifenden Fase zu erreichen.

Je kleiner der Profil- bzw. Eingriffswinkel ist, desto geringer fällt die Ausbildung der Fase (d. h. der Materialabtrag) aus (der Fasenwinkel zur Stirnfläche wird größer). Günstig sind somit Verzahnungen mit großen Profil- bzw. Eingriffswinkeln bzw. Verzahnungen, bei denen der Profilnutzbereich entfernt vom Grundkreis der Verzahnung liegen.

Je stärker die Krümmung des Verzahnungsprofils im Stirnschnitt ist, desto stärker variiert der Fasenwinkel innerhalb der Flanke.

Ein zu großer Schrägungswinkel der Verzahnung kann unter bestimmten Bedingungen problematisch werden. Dem kann abgeholfen werden, indem man entweder den Anstellwinkel verkleinert oder eine asymmetrische profilierte Schleifscheibe verwendet.

Somit besteht die grundsätzliche Möglichkeit, die gewünschten Fasen (insbesondere zum Entgraten) kontrolliert am Werkstück anzubringen.

Besonders vorteilhaft wird das Verfahren bei Werkstücken mit einer großen Anzahl an Zähnen eingesetzt, da diese kaum Krümmung auf den Flanken aufweisen und im Normalfall der Profilnutzbereich weit weg vom Grundkreisdurchmesser ist.

### Beispiel:

Ein großes Werkstück wurde mit einer Evolventenverzahnung versehen (Zähnezahl z = 291, Modul m = 9, Breite von b = 260 mm). Dabei wurde die Verzahnung ins Volle geschliffen. Die Bearbeitungszeit hierfür betrug ca. 40 Stunden. Dann wurden in der oben erläuterten Weise an beiden Stirnseiten des Werkstücks die Fasen 9 angeschliffen. Für sämtliche Fasen ergab sich hier eine weitere Bearbeitungszeit von ca. 1,5 Stunden. Das Werkstück verbleibt für die komplette Operation in einer einzigen Aufspannung. Lediglich die Schleifscheibe 9 wurde für das Schleifen der Fasen durch Abrichten umprofiliert.

Bei Werkstücken mit Verzahnungen mit großem Schrägungswinkel kann es sinnvoll bzw. erforderlich sein, dass eine Schleifscheibe mit asymmetrischem Profil eingesetzt wird.

Zu beachten ist beim Einsatz des vorgeschlagenen Verfahrens natürlich auch, dass durch das Bewegen der Schleifscheibe in die für das Anschleifen der Fase benötigten Position (infolge des starken Abtauchens der Schleifscheibe) keine Kollision mit anderen Bauteilen (Spannmittel, Abrichteinheit, Teile des Werkstücks selbst, etc.) erfolgt.

Sollte es infolge eines zu steilen Anstellwinkels zur Stirnseite (für das Anschleifen der Fase) zum absehbaren Einschleifen in die Flanke kommen, wird der Anstellwinkel so eingestellt, dass dies verhindert wird.

Das genannte (unerwünschte) Einschleifen in die Flanke kann auch über ein Schwenken (s. Figur 5, Schwenkwinkel ε) der Schleifscheibe verhindert werden.

### Bezugszeichenliste:

- 1: Verzahnung (Profil)
- 2: Werkstück
- 3: Profilschleifscheibe
- 4: vorgefertigte / zu fertigende Zahn- oder Profillücke
- 5: axialer Endbereich der Verzahnung bzw. des Profils
- 6: axialer Endbereich der Verzahnung bzw. des Profils
- 7: Stirnfläche
- 8: axiales Ende der Zahn- oder Profillücke
- 9: Fase

- a: Drehachse des Werkstücks
- b: Drehachse der Schleifscheibe
- M: Mittelpunkt der Schleifscheibe
- e: axiale Erstreckung der Schleifscheibe
- f: Fußkreis der Verzahnung bzw. des Profils
- RV: Verbindungslinie axiales Ende der Zahn- oder Profillücke und Mittelpunkt
- δ: Winkel
- ε: Schwenkwinkel

## Patentansprüche

1. Verfahren zum Schleifen einer Verzahnung (1) oder eines Profils eines Werkstücks (2) mittels einer Schleifscheibe (3), wobei die Schleifscheibe (3) als Profilschleifscheibe ausgebildet ist und durch vorgefertigte Zahn- oder Profillücken (4) geführt wird oder Zahn- oder Profillücken (4) herstellt,
wobei das Werkstück (2) eine Drehachse (a) aufweist,
wobei die Schleifscheibe (3) eine Drehachse (b) sowie einen Mittelpunkt (M) aufweist, der auf der Drehachse (b) der Schleifscheibe (3) und in der Mitte der axialen Erstreckung (e) der Schleifscheibe (3) liegt, und
wobei das Werkstück (2) zumindest in einem axialen Endbereich (5, 6) der Verzahnung (1) oder des Profils eine Stirnfläche (7) aufweist,
das Schleifen der Verzahnung (1) oder des Profils die Schritte umfasst:
a) Schleifen der Zahn- oder Profillücken (4) des Werkstücks (2) mittels der Profilschleifscheibe (3); und
b) Schleifen von Fasen (9) in den Bereich des axialen Endes (8) der Zahn- oder Profillücken (4) mittels der Schleifscheibe (3), wobei die Schleifscheibe (3) in einer Position angeordnet wird oder zumindest zeitweise während des Schleifens der Fasen (9) eine Position einnimmt, bei der die Schleifscheibe (3) relativ zum Werkstück (2) so angeordnet ist, dass ein axiales Ende (8) der Zahn- oder Profillücke (4) die Schleifscheibe (3) kontaktiert,
**dadurch gekennzeichnet, dass** in einer Projektion auf eine Ebene, die die Drehachse (a) des Werkstücks (2) sowie den Mittelpunkt (M) der Schleifscheibe (3) beinhaltet, zwischen der Drehachse (a) des Werkstücks (2) und der Verbindungslinie (RV) zwischen dem axialen Ende der Zahn- oder Profillücke (8) und dem Mittelpunkt (M) ein Winkel (δ) eingeschlossen wird, der zwischen 20° und 70° liegt,
wobei die Profilschleifscheibe (3) eine abrichtbare Schleifscheibe ist und dass nach der Durchführung des Schritts a) und vor der Durchführung des Schritts b) das Profil der Schleifscheibe (3) durch einen Abrichtvorgang verändert wird.

2. Verfahren nach Anspruch 1, **dadurch gekennzeichnet, dass** bei der Durchführung des Schritts a) gemäß Anspruch 1 die Zahn- oder Profillücken (4) ins Volle geschliffen werden.

3. Verfahren nach Anspruch 1 oder 3, **dadurch gekennzeichnet, dass** Schritt b) von Anspruch 1 erfolgt, indem eine relative Zustellung zwischen Werkstück (2) und Schleifscheibe (3) vorgenommen wird.

4. Verfahren nach einem der Ansprüche 1 bis 3, **dadurch gekennzeichnet, dass** Schritt b) von Anspruch 1 erfolgt, indem die Schleifscheibe (3) relativ zum Werkstück (2) senkrecht zur Verbindungslinie (RV) oder entlang einer vorgegebenen Bahn geführt wird.

5. Verfahren nach einem der Ansprüche 1 bis 4, **dadurch gekennzeichnet, dass** der Winkel (δ) zwischen 35° und 55° beträgt.

6. Verfahren nach einem der Ansprüche 1 bis 5, **dadurch gekennzeichnet, dass** beim Schleifen der Fasen (9) gemäß Schritt b) von Anspruch 1 eine Ebene, die durch den Mittelpunkt (M) der Schleifscheibe (3) geht und senkrecht auf der Drehachse (b) der Schleifscheibe (3) steht, mit der Zahn- oder Profillücke (4) fluchtet.

7. Verfahren nach einem der Ansprüche 1 bis 5, **dadurch gekennzeichnet, dass** beim Schleifen der Fasen (9) gemäß Schritt b) von Anspruch 1 eine Ebene, die durch den Mittelpunkt (M) der Schleifscheibe (3) geht und senkrecht auf der Drehachse (b) der Schleifscheibe (3) steht, aus der Flucht mit der Zahn- oder Profillücke (4) um einen Schwenkwinkel (ε) verschwenkt ist.

8. Verfahren nach Anspruch 7, **dadurch gekennzeichnet, dass** der Schwenkwinkel (ε) zwischen 2° und 25° beträgt, wobei insbesondere im Falle des Schleifens einer Schrägverzahnung der Schwenkwinkel (ε) zwischen 2° und dem Schrägungswinkel der Verzahnung liegt.

9. Verfahren nach einem der Ansprüche 1 bis 5, **dadurch gekennzeichnet, dass** beim Schleifen der Fasen (9) gemäß Schritt b) von Anspruch 1 der Winkel zwischen der Projektion der Drehachse (b) der Schleifscheibe (3) auf eine Mittenebene des Werkstücks (2), die die Drehachse (a) des Werkstücks (2) beinhaltet, und der Drehachse (a) des Werkstücks 90° beträgt.

10. Verfahren nach einem der Ansprüche 1 bis 9, **dadurch gekennzeichnet, dass** die Fasen (9) an den axialen Enden (8) sämtlicher Zahn- oder Profillücken (4) geschliffen werden.

11. Verfahren nach einem der Ansprüche 1 bis 10, **dadurch gekennzeichnet, dass** die Fasen (9) in beiden axialen Endbereichen (5, 6) des Werkstücks (2) geschliffen werden.

## Claims

1. Method for grinding a toothing (1) or a profile of a workpiece (2) by means of a grinding wheel (3), wherein the grinding wheel (3) is designed as a profile grinding wheel and is guided through pre-machined tooth or profile gaps (4) or produces tooth or profile gaps (4),
wherein the workpiece (2) has an axis of rotation (a),
wherein the grinding wheel (3) has an axis of rotation (b) and a centre (M) which lies on the axis of rotation (b) of the grinding wheel (3) and in the middle of the axial extension (e) of the grinding wheel (3), and
wherein the workpiece (2) has an end face (7) at least in one axial end region (5, 6) of the toothing (1) or of the profile,
wherein the grinding the toothing (1) or the profile comprises the steps:
a) Grinding of the tooth or profile gaps (4) of the workpiece (2) by means of the profile grinding wheel (3); and
b) Grinding of chamfers (9) in the region of the axial end (8) of the tooth or profile gaps (4) by means of the grinding wheel (3), wherein the grinding wheel (3) is arranged in a position, or at least temporarily assumes a position during the grinding of the chamfers (9), in which the grinding wheel (3) is arranged relative to the workpiece (2) in such a way that an axial end (8) of the tooth or profile gap (4) contacts the grinding wheel (3),
**characterized in that**
in a projection on a plane including the axis of rotation (a) of the workpiece (2) as well as the centre (M) of the grinding wheel (3), between the axis of rotation (a) of the workpiece (2) and the connecting line (RV) between the axial end of the tooth or profile gap (8) and the centre (M) an angle (δ) is included which lies between 20° and 70°,
wherein the profile grinding wheel (3) is a dressable grinding wheel and that after carrying out step a) and before carrying out step b) the profile of the grinding wheel (3) is changed by a dressing operation.

2. Method according to claim 1, **characterized in that** when carrying out step a) according to claim 1, the tooth or profile gaps (4) are ground from the solid.

3. Method according to one of claims 1 or 2, **characterized in that** step b) of claim 1 is carried out by performing a relative infeed between workpiece (2) and grinding wheel (3).

4. Method according to one of claims 1 to 3, **characterized in that** step b) of claim 1 is performed by guiding the grinding wheel (3) relative to the workpiece (2) perpendicular to the connecting line (RV) or along a predetermined path.

5. Method according to one of claims 1 to 4, **characterized in that** the angle (δ) is between 35° and 55°.

6. Method according to one of claims 1 to 5, **characterized in that** during grinding of the chamfers (9) according to step b) of claim 1, a plane passing through the centre (M) of the grinding wheel (3) and perpendicular to the axis of rotation (b) of the grinding wheel (3) is aligned with the tooth or profile gap (4).

7. Method according to one of claims 1 to 5, **characterized in that** during grinding of the chamfers (9) according to step b) of claim 1, a plane passing through the centre (M) of the grinding wheel (3) and perpendicular to the axis of rotation (b) of the grinding wheel (3) is pivoted out of alignment with the tooth or profile gap (4) by a pivoting angle (ε).

8. Method according to claim 7, **characterized in that** the pivoting angle (ε) is between 2° and 25°, wherein, in particular in the case of grinding a helical toothing, the pivoting angle (ε) is between 2° and the helix angle of the toothing.

9. Method according to one of claims 1 to 5, **characterized in that**, when grinding the chamfers (9) according to step b) of claim 1, the angle between the projection of the axis of rotation (b) of the grinding wheel (3) onto a centre plane of the workpiece (2), which includes the axis of rotation (a) of the workpiece (2), and the axis of rotation (a) of the workpiece is 90°.

10. Method according to one of claims 1 to 9, **characterized in that** the chamfers (9) are ground at the axial ends (8) of all tooth or profile gaps (4).

11. Method according to one of claims 1 to 10, **characterized in that** the chamfers (9) are ground in both axial end regions (5, 6) of the workpiece (2).

## Revendications

1. Procédé permettant de meuler une denture (1) ou un profil d'une pièce à travailler (2) au moyen d'une meule (3), dans lequel la meule (3) est réalisée sous forme de meule à profiler et est guidée à travers des interstices de dents ou de profil (4) ou fabrique des interstices de dents ou de profil (4),
dans lequel la pièce à travailler (2) présente un axe de rotation (a),
dans lequel la meule (3) présente un axe de rotation (b) ainsi qu'un centre (M) qui se trouve sur l'axe de rotation (b) de la meule (3) et au milieu de l'étendue axiale (e) de la meule (3), et
dans lequel la pièce à travailler (2) présente une surface frontale (7) au moins dans une zone d'extrémité axiale (5, 6) de la denture (1) ou du profil,
dans lequel le meulage de la denture (1) ou du profil comprenant les étapes consistant à:
a) meuler les interstices de dents ou de profil (4) de la pièce à travailler (2) au moyen de la meule à profiler (3) ; et
b) meuler des chanfreins (9) dans la zone de l'extrémité axiale (8) des interstices de dents ou de profil (4) au moyen de la meule (3), la meule (3) étant disposée dans une position ou occupe au moins temporairement pendant le meulage des chanfreins (9) une position dans laquelle la meule (3) est disposée par rapport à la pièce à travailler (2) de telle sorte qu'une extrémité axiale (8) de l'interstice de dents ou de profil (4) entre en contact avec la meule (3),
**caractérisé en ce que** dans une projection sur un plan qui comporte l'axe de rotation (a) de la pièce à travailler (2) ainsi que le centre (M) de la meule (3), un angle (δ) qui est compris entre 20° et 70° est formé entre l'axe de rotation (a) de la pièce à travailler (2) et la ligne de jonction (RV) entre l'extrémité axiale de l'interstice de dents ou de profil (8) et le centre (M),
dans lequel la meule à profiler (3) est une meule pouvant être dressée, et **en ce qu'**après l'exécution de l'étape a) et avant l'exécution de l'étape b), le profil de la meule (3) est modifié par un processus de dressage.

2. Procédé selon la revendication 1, **caractérisé en ce que** lors de l'exécution de l'étape a) selon la revendication 1, les interstices de dents ou de profil (4) sont meulés dans la masse.

3. Procédé selon la revendication 1 ou 2, caractérisé en ce l'étape b) selon la revendication 1 est effectuée en ce qu'une approche relative est effectuée entre la pièce à travailler (2) et la meule (3).

4. Procédé selon l'une quelconque des revendications 1 à 3, **caractérisé en ce que** l'étape b) selon la revendication 1 est effectuée **en ce que** la meule (3) est guidée par rapport à la pièce à travailler (2) perpendiculairement à la ligne de jonction (RV) ou le long d'une trajectoire prédéfinie.

5. Procédé selon l'une quelconque des revendications 1 à 4, **caractérisé en ce que** l'angle (δ) est compris entre 35° et 55°.

6. Procédé selon l'une quelconque des revendications 1 à 5, **caractérisé en ce que** lors du meulage des chanfreins (9) selon l'étape b) selon la revendication 1, un plan qui passe par le centre (M) de la meule (3) et est perpendiculaire à l'axe de rotation (b) de la meule (3) est aligné sur l'interstice de dents ou de profil (4).

7. Procédé selon l'une quelconque des revendications 1 à 5, **caractérisé en ce que** lors du meulage des chanfreins (9) selon l'étape b) selon la revendication 1, un plan qui passe par le centre (M) de la meule (3) et est perpendiculaire à l'axe de rotation (b) de la meule (3) sort de l'alignement avec l'interstice de dents ou de profil (4) avec un angle de pivotement (ε).

8. Procédé selon la revendication 7, **caractérisé en ce que** l'angle de pivotement (ε) est compris entre 2° et 25°, dans lequel en particulier dans le cas du meulage d'une denture hélicoïdale, l'angle de pivotement (ε) est compris entre 2° et l'angle de chanfreinage de la denture.

9. Procédé selon l'une quelconque des revendications 1 à 5, **caractérisé en ce que** lors du meulage des chanfreins (9) selon l'étape b) selon la revendication 1, l'angle entre la projection de l'axe de rotation (b) de la meule (3) sur un plan central de la pièce à travailler (2), qui comporte l'axe de rotation (a) de la pièce à travailler (2), et l'axe de rotation (a) de la pièce à travailler est de 90°.

10. Procédé selon l'une quelconque des revendications 1 à 9, **caractérisé en ce que** les chanfreins (9) sont meulés aux extrémités axiales (8) de tous les interstices de dents ou de profil (4).

11. Procédé selon l'une quelconque des revendications 1 à 10, **caractérisé en ce que** les chanfreins (9) sont meulés dans les deux zones d'extrémité axiales (5, 6) de la pièce à travailler (2).
